# EUROPÄISCHE PATENTSCHRIFT

(11) **EP 3 274 604 B1**
(45) Veröffentlichungstag und Bekanntmachung des Hinweises auf die Patenterteilung: **28.08.2019**
(21) Anmeldenummer: 16706360.1
(22) Anmeldetag: 26.02.2016
(51) Int. Cl.: F16D 3/76

(54) **ELASTISCHE AUSGLEICHSKUPPLUNG MIT FORMSCHLÜSSIG INEINANDERGREIFENDEN NABEN**
ELASTIC COMPENSATING COUPLING HAVING FORM-FITTING INTERENGAGING HUBS
ACCOUPLEMENT COMPENSATEUR ÉLASTIQUE COMPRENANT DES MOYEUX S'IMBRIQUANT LES UNS DANS LES AUTRES PAR COMPLÉMENTARITÉ DE FORME

(30) Priorität: 26.03.2015 DE 102015205501
(43) Veröffentlichungstag der Anmeldung: 31.01.2018
(73) Patentinhaber: ZF Friedrichshafen AG, 88046 Friedrichshafen (DE)
(72) Erfinder: WOLF, Daniel, 88048 Friedrichshafen (DE); MAIR, Ulrich, 88046 Friedrichshafen (DE)
(86) Internationale Anmeldenummer: PCT/EP2016/054040
(87) Internationale Veröffentlichungsnummer: WO 2016/150645

(56) Entgegenhaltungen:
- WO-A1-2012/095319
- BE-A1- 800 771
- DE-A1- 2 053 326
- US-A- 2 948 129
- US-A- 4 667 530

## Beschreibung

Die vorliegende Erfindung betrifft eine Ausgleichskupplung, insbesondere für ein Schienenfahrzeug und dort vorzugsweise zum antriebsseitigen Einsatz, sowie einen Antriebsstrang, insbesondere für ein Schienenfahrzeug, gemäß der im Oberbegriff der Patentansprüche 1 und 19 näher definierten Art.

Elastische, nicht schaltbare Torsionskupplungen werden zum Zwecke der Drehmomenten übertragenden Verbindung zwischen zwei Wellenanschlüssen verbaut. Ihr Sinn besteht neben der Drehmomentübertragung in der Schwingungsisolierung und akustischen Abkoppelung der beiden Wellen voneinander. Ein bevorzugtes Einsatzgebiet von elastischen Torsionskupplungen bzw. elastischen Ausgleichskupplungen der eingangs genannten Art sind insbesondere Schienenfahrzeuge. Dort werden im Wesentlichen zwei unterschiedliche Einbaupositionen unterschieden. Die erste Position, die üblicherweise als "antriebsseitig" bezeichnet wird, ist die zwischen der Ausgangswelle des Elektromotors und der Eingangswelle des Getriebes. Die Drehzahlen der miteinander zu verbindenden Wellen sind an dieser Stelle sehr hoch und der zur Verfügung stehende Einbauraum ist verhältnismäßig knapp. Die zweite Position ist die zwischen der Ausgangswelle des Getriebes und dem angetriebenen Radwellensatz. Hier sind die Drehzahlen erheblich niedriger und es steht mehr Einbauraum zur Verfügung.

Aus der DE 103 25 740 A1 ist eine torsionselastische Kupplung für eine erste Nabe und eine zweite Nabe, insbesondere einer Brennkraftmaschine, bekannt. Hierbei weist die zweite Nabe eine Außenverzahnung und die erste Nabe eine Ausnehmung mit Innenverzahnung auf. Die zweite Nabe greift in die Ausnehmung der ersten Nabe koaxial zu dieser ein. Des Weiteren ist in der Ausnehmung ein Zahnriemen koaxial zur ersten Nabe vorgesehen, welcher eine Außenverzahnung und eine Innenverzahnung aufweist. Die Innenverzahnung der ersten Nabe greift in die Außenverzahnung des Zahnriemens und die Außenverzahnung der zweiten Nabe greift in die Innenverzahnung des
Aus der Schrift US 4 667 530 A ist eine weitere Ausgleichkupplung gemäß Oberbegriff von Anspruch 1 bekannt.

Die der Erfindung zu Grunde liegende Aufgabe wird durch die Merkmale der Patentansprüche 1 und 19 gelöst. Weitere vorteilhafte Ausgestaltungen ergeben sich aus den Unteransprüchen und den Zeichnungen.

Es wird eine Ausgleichskupplung, insbesondere für ein Schienenfahrzeug und dort vorzugsweise zum antriebsseitigen Einsatz, vorgeschlagen, die eine Innennabe zum drehfesten Verbinden mit einer ersten Welle und einer Hohlnabe zum drehfesten Verbinden mit einer zweiten Welle aufweist. Die Hohlnabe umschließt die Innennabe in Umfangsrichtung. Die Innennabe ist somit im Inneren der Hohlnabe angeordnet. Des Weiteren ist die Hohlnabe von der Innennabe radial beabstandet. Ferner umfasst die Ausgleichskupplung ein elastisches Ausgleichselement. Dieses ist derart ausgebildet, dass die beiden Naben torsionselastisch, achsversatz- und/oder beugewinkelausgleichend miteinander verbunden sind. Das Ausgleichselement ist in Radialrichtung zwischen der Innennabe und der Hohlnabe angeordnet. Des Weiteren umschließt das Ausgleichselement die Innennabe in Umfangsrichtung. Die Innennabe weist bei einer axialen Draufsicht eine derart geformte Außenkontur und die Hohlnabe eine derart mit dieser Außenkontur korrespondierende Innenkontur auf, dass die Innennabe und die Hohlnabe zur Drehmomentübertragung in Umfangsrichtung formschlüssig ineinandergreifen. Vorteilhafterweise wirken auf das zwischen den beiden Naben angeordnete Ausgleichselement somit nicht ausschließlich Scherspannungen. Derartige Scherspannungen können sehr schnell zu einer Überbeanspruchung des Ausgleichselements und infolgedessen zu einer Beschädigung führen. Durch das formschlüssige ineinandergreifen der beiden Naben wird das Ausgleichselement vorteilhafterweise bei Drehmomentübertragung zwischen der Außenkontur und der Innenkontur verpresst bzw. durch eine Druckkomponente elastisch verformt. Das Ausgleichselement wird somit zumindest teilweise auf Druck beansprucht. Hierdurch können vorteilhafterweise die auf das Ausgleichselement einwirkenden Scherkräfte reduziert werden, so dass die Lebensdauer des Ausgleichselements erhöht werden kann. Infolgedessen können die Wartungsintervalle der Ausgleichskupplung großzügiger gewählt werden. Auch werden hierdurch die Instandhaltungskosten der Ausgleichskupplung reduziert.

Vorteilhaft ist es, wenn die beiden Naben, d.h. die Innennabe und die Hohlnabe, derart ineinandergreifen, dass das Ausgleichselement bei Drehmomentübertragung zwischen der Innenkontur und der Außenkontur verpressbar und/oder zumindest teilweise auf Druck beanspruchbar ist. Wie bereits vorstehend erwähnt, kann hierdurch die Lebensdauer des Ausgleichselementes erhöht werden, da Druckbelastungen im Vergleich zu Scherbelastungen besser vom Ausgleichselement kompensiert werden können.

In einer vorteilhaften Weiterbildung der Erfindung weist die Außenkontur der Innennabe zumindest einen Außenkontaktabschnitt auf, in dem das Ausgleichselement an der Innennabe anliegt. Zusätzlich oder alternativ ist es ferner vorteilhaft, wenn die Innenkontur der Hohlnabe zumindest einen Innenkontaktabschnitt aufweist, in dem das Ausgleichselement an der Hohlnabe anliegt. Hierdurch kann, insbesondere mittels Formschluss, das Drehmoment mittelbar über das elastische Ausgleichselement zwischen den beiden Naben übertragen werden.

Um das Ausgleichselement in Umfangsrichtung über ein möglichst großes Winkelintervall gleichmäßig belasten zu können, ist es vorteilhaft, wenn der Außenkontaktabschnitt und/oder der Innenkontaktabschnitt konvex gekrümmt sind. Hierdurch ist das Ausgleichselement derart zwischen den beiden Naben angeordnet, dass es sich an den konvex gekrümmten Außenkontaktabschnitt und/oder Innenkontaktabschnitt der jeweiligen Nabe anschmiegt.

Des Weiteren ist es vorteilhaft, wenn der zumindest eine Außenkontaktabschnitt und Innenkontaktabschnitt zueinander in Umfangsrichtung versetzt angeordnet sind. Der Außenkontaktabschnitt und der Innenkontaktabschnitt befinden sich somit zumindest teilweise in unterschiedlichen bzw. zueinander versetzten Winkelintervallen. Infolgedessen liegt das Ausgleichselement in einem ersten Winkelintervall an dem Außenkontaktabschnitt und in einem zweiten dazu versetzten Winkelintervall am Innenkontakt-abschnitt an. Hierdurch kann das Ausgleichselement in Radialrichtung zwischen den beiden Naben verspannt werden. Des Weiteren kann somit eine gleichmäßige Belastung des Ausgleichselementes bewirkt werden, so dass lokale Überbelastungen des Ausgleichselementes vermieden werden.

Zur torsionselastischen Übertragung des Drehmomentes ist es vorteilhaft, wenn der Innenkontaktabschnitt der Hohlnabe und der Außenkontaktabschnitt der Innennabe einen gemeinsamen Überlappungsbereich aufweisen. Der Überlappungsbereich erstreckt sich sowohl der Außenkontur als auch der Innenkontur folgend in Umfangsrichtung der Ausgleichskupplung. In dem Überlappungsbereich liegt das Ausgleichselement sowohl an der Innenkontur der Hohlnabe als auch an der Außenkontur der Innennabe an. Bei Drehmomentübertragung wird das Ausgleichselement somit im Überlappungsbereich zwischen der Außenkontur der Innennabe und der Innenkontur der Hohlnabe verpresst. Hierbei wird das Ausgleichselement zumindest teilweise auf Druck beansprucht. Wenn sich der Überlappungsbereich im Wesentlichen in Radialrichtung der Ausgleichskupplung erstreckt, können die Scherkräfte im Ausgleichselement im Wesentlichen auf Null reduziert werden. Der Überlappungsbereich dient somit zur torsionselastischen Übertragung des Drehmoments zwischen den beiden Naben bei auf Druck belastetem Ausgleichselement.

Erfindungsgemäß ist es, wenn die Außenkontur zumindest einen Ausgriffsabschnitt aufweist, in dem das Ausgleichselement von der Innennabe, insbesondere in Radialrichtung, beabstandet ist. Zusätzlich oder alternativ ist es auch vorteilhaft, wenn die Innenkontur der Hohlnabe zumindest einen Ausgriffsabschnitt aufweist, in dem das Ausgleichselement von der Hohlnabe, insbesondere in Radialrichtung, beabstandet ist. Durch die Ausgriffsabschnitte liegt das Ausgleichselement somit im Bereich der Ausgriffsabschnitte lediglich an einer der beiden Konturen an. Von der mit dem Ausgriffsabschnitt ausgebildeten Kontur, d. h. der Außenkontur und/oder Innenkontur, ist das Ausgleichselement beabstandet. Hierdurch kann das Ausgleichselement beispielsweise auf Spannung gehalten werden, so dass dieses nicht aus dem Zwischenhohlraum zwischen der Außenkontur und der Innenkontur herausrutschen kann.

Aus fertigungstechnischen Gründen ist es vorteilhaft, wenn der zumindest eine Ausgriffsabschnitt der Außenkontur und/oder der zumindest eine Ausgriffsabschnitt der Innenkontur konkav gekrümmt ist. Hierdurch kann vorteilhafterweise ein fließender Übergang zwischen dem Ausgriffsabschnitt und dem jeweils dazu benachbarten Kontaktabschnitt, d.h. insbesondere dem Außenkontaktabschnitt und/oder dem Innenkontaktabschnitt, ausgebildet werden. Alternativ oder zusätzlich kann der Ausgriffsabschnitt aber auch eckig ausgebildet sein.

Diesbezüglich ist es ebenso vorteilhaft, wenn der Ausgriffsabschnitt der Außenkontur und/oder der Ausgriffsabschnitt der Innenkontur in Radialrichtung dem Kontaktabschnitt, d.h. dem Außenkontaktabschnitt und/oder dem Innenkontaktabschnitt, der jeweils anderen Nabe gegenüberliegend angeordnet ist. Somit ist beispielsweise dem Außenkontaktabschnitt der Innennabe der Ausgriffsabschnitt der Hohlnabe gegenüberliegend angeordnet. Zusätzlich oder alternativ ist ferner der Innenkontaktabschnitt der Hohlnabe dem entsprechenden Ausgriffsabschnitt der Innennabe, insbesondere in Radialrichtung, gegenüberliegend angeordnet.

Um größere Beugewinkel zwischen den Naben ausgleichen zu können, ist es vorteilhaft, wenn zwischen der Innennabe und dem Ausgleichselement zumindest ein Innenhohlraum und/oder zwischen der Hohlnabe und dem Ausgleichselement zumindest ein Außenhohlraum ausgebildet ist. Mittels des Innenhohlraumes und/oder Außenhohlraumes liegt das Ausgleichselement ferner lediglich an einer seiner beiden Seiten an einer der beiden Naben an. Infolgedessen kann das Ausgleichselement zwischen den beiden Naben verspannt bzw. auf Spannung gehalten werden.

Vorteilhaft ist es auch, wenn der Ausgriffsabschnitt der Außenkontur und/oder der Innenhohlraum in Umfangsrichtung zwischen zwei Außenkontaktabschnitten der Innennabe ausgebildet sind. Zusätzlich oder alternativ ist es ferner vorteilhaft, wenn der Ausgriffsabschnitt der Innenkontur und/oder der Außenhohlraum in Umfangsrichtung zwischen zwei Innenkontaktabschnitten der Hohlnabe ausgebildet sind. Hierdurch ist das Ausgleichselement in Umfangsrichtung betrachtet jeweils abwechselnd mit der Innenkontur und/oder der Außenkontur in Kontakt. Vorteilhafterweise kann das Ausgleichselement somit auf Spannung gehalten werden. Die Innennabe weist vorzugsweise alternierend mehrere Außenkontaktabschnitte und Ausgriffsabschnitte auf. Ebenso weist die Hohlnabe alternierend mehrere Innenkontaktabschnitte und Ausgriffsabschnitte auf.

In einer vorteilhaften Weiterbildung der Erfindung ist der zumindest eine Innenkontaktabschnitt der Hohlnabe und der zumindest eine Außenkontaktabschnitt der Innennabe in Umfangsrichtung voneinander beabstandet. In diesem Fall würden diese folglich keinen Überlappungsbereich aufweisen. Stattdessen ist zwischen diesen beiden vorzugsweise ein Übergangsbereich ausgebildet, in dem das Ausgleichselement weder an der Innennabe noch an der Hohlnabe anliegt. Hierdurch kann die Torsionselastizität der Ausgleichskupplung erhöht werden.

Um größere Beugewinkel ausgleichen zu können, ist es vorteilhaft, wenn sich die Außenkontur der Innennabe über ihren gesamten Umfang hinweg, vorzugsweise abwechselnd, aus mehreren Außenkontaktabschnitten und Ausgriffsabschnitten zusammensetzt. Vorzugsweise gehen die jeweils benachbart zueinander angeordneten Außenkontaktabschnitte und Ausgriffsabschnitte tangential ineinander über. Diesbezüglich ist es ferner vorteilhaft, wenn die Innenkontur der Hohlnabe über ihren gesamten Umfang hinweg, vorzugsweise abwechselnd, aus mehreren Innenkontaktabschnitten und Ausgriffsabschnitten zusammengesetzt ist. Auch diesbezüglich ist es vorteilhaft, wenn zueinander benachbarte Innenkontaktabschnitte und Ausgriffsabschnitte tangential ineinander übergehen.

Um eine im Wesentlichen homogene Belastung des Ausgleichselementes zu begünstigen, ist es vorteilhaft, wenn die Außenkontaktabschnitte, Innenkontaktabschnitte und/oder Ausgriffsabschnitte als Bogen-und/oder Kreissegmente ausgebildet sind. Diesbezüglich ist es insbesondere vorteilhaft, wenn die Form der Außenkontur und/oder der Innenkontur ein Circulo-Polygon, insbesondere ein Circulo-Dreieck, Circulo-Viereck oder Circulo-Fünfeck, ist. Ein Circulo-Polygon entspricht im Wesentlichen einem Polygon, wobei die Ecken im Falle der Außenkontur konvex und im Falle der Innen-kontur konkav abgerundet sind. Zusätzlich oder alternativ sind die Seiten des Polygons gebogen, insbesondere im Falle der Außenkontur konkav und/oder im Falle der Innenkontur konvex.

Um ein Verschieben des Ausgleichselementes vermeiden zu können, ist es vorteilhaft, wenn dieses in Umfangsrichtung auf Spannung gehalten wird. Zum Spannen des Ausgleichselementes ist es vorteilhaft, wenn der Außenkontaktabschnitt der Innennabe und/oder der Innenkontaktabschnitt der Hohlnabe in Radialrichtung verstellbar bzw. verschiebbar sind. Alternativ oder zusätzlich ist es diesbezüglich ferner vorteilhaft, wenn deren Krümmung veränderbar ist.

Wenn das Ausgleichselement verschlissen ist, muss dieses ausgetauscht werden. Um die Wartung oder den Austausch des Ausgleichselementes einfach zu gestalten, ist es vorteilhaft, wenn die Innennabe und/oder die Hohlnabe mehrteilig und/oder teilbar ausgebildet sind.

Insbesondere beim Ausgleich von Beugewinkel kann es passieren, dass das Ausgleichselement von der Innennabe und/oder von der Hohlnabe rutscht. Um dies zu vermeiden, ist es vorteilhaft, wenn der Außenkontaktabschnitt und/oder der Innenkontaktabschnitt zur Zentrierung des Ausgleichselementes, zur Entlastung seiner Randbereiche und/oder zur Ermöglichung größerer Beugewinkel im Axialschnitt bzw. Längsschnitt ballige ausgebildet ist.

Zusätzlich oder alternativ ist es ferner vorteilhaft, wenn das Ausgleichselement zur axialen Zentrierung auf der Innennabe und/oder auf der Hohlnabe eine sich in Umfangsrichtung erstreckende Nut und/oder einen sich in Umfangsrichtung erstreckenden Steg aufweist. Dieser greift vorteilhafterweise formschlüssig in einen sich in Umfangsrichtung erstreckenden Zentriersteg und/oder in eine sich in Umfangsrichtung erstreckende Zentriernut des Außenkontaktabschnitts und/oder des Innenkontaktabschnitts ein. Hierdurch kann vermieden werden, dass das Ausgleichselement in Axialrichtung von der Innennabe und/oder der Hohlnabe herunterrutscht.

Um den Austausch des Ausgleichselementes erleichtern zu können, ist es vorteilhaft, wenn das Ausgleichselement in einem Verschlussbereich teilbar ist und/oder der Verschlussbereich zur Außenkontur und/oder zur Innenkontur beabstandet ist. Demnach ist der Verschlussbereich vorzugsweise im Übergangsbereich zwischen dem Außenkontaktabschnitt und Innenkontaktabschnitt angeordnet.

Vorteilhaft ist es, wenn das Ausgleichselement zumindest einen, insbesondere armierten, Zahnriemen umfasst. Der Zahnriemen weist vorzugsweise über seinen radial äußeren Umfang und/oder radial inneren Umfang hinweg eine Verzahnung auf. Des Weiteren ist es vorteilhaft, wenn der Zahnriemen vorzugsweise formschlüssig, kraftschlüssig und/oder stoffschlüssig an dessen Verzahnung befestigte, insbesondere sphärische, Eingriffselemente aufweist. In diesem Fall würde die Außenkontur und/oder Innenkontur entsprechende Ausnehmungen aufweisen, in welche die Eingriffselemente formschlüssig eingreifen.

Auch ist es vorteilhaft, wenn das Ausgleichselement einen mit der Innennabe verzahnten Innenzahnriemen, einen mit der Hohlnabe verzahnten Außenzahnriemen und/oder ein zwischen diesen beiden angeordnetes und/oder mit diesen verzahntes Zwischenelement umfasst. Das Zwischenelement ist vorzugsweise unelastisch. Des Weiteren besteht dieses vorzugsweise aus einem Metall. Ferner ist das Zwischenelement flexibel, so dass es sich an die Innenkontur und/oder Außenkontur anpassen kann. Bei einem aus einem Innenzahnriemen, Außenzahnriemen und einem Zwischenelement ausgebildeten Ausgleichselement teilen sich die auszugleichenden Beugewinkel auf die beiden Zahnriemen auf, wodurch ein größerer Toleranzausgleich ermöglicht wird.

Auch ist es vorteilhaft, wenn die Ausgleichskupplung ein Zentrierelement aufweist. Dieses zentriert vorzugsweise die Innennabe in der Hohlnabe. Das Zentrierelement ist vorzugsweise ein Gleitlager mit zumindest einer sphärischen Gleitfläche. Zusätzlich oder alternativ kann das Zentrierelement ein axial verschiebbares Wälzlager sein. Demnach kann das Wälzlager beispielsweise ein Pendelrollenlager sein, deren Außenring oder Innenring axialverschieblich im jeweils anderen Teil der Nabe gelagert sind.

Vorgeschlagen wird ferner ein Antriebsstrang, insbesondere für ein Schienenfahrzeug, mit einem Antrieb, insbesondere einem Elektromotor, einem Getriebe, einem antreibbaren Radwellensatz und einer torsionselastischen Ausgleichskupplung. Die torsionselastische Ausgleichskupplung ist antriebsseitig zwischen dem Antrieb und dem Getriebe oder abtriebsseitig zwischen dem Getriebe und dem Radwellensatz angeordnet. Die Ausgleichskupplung ist gemäß der vorangegangenen Beschreibung ausgebildet, wobei die genannten Merkmale einzeln oder in beliebiger Kombination vorhanden sein können.

Nachfolgend ist die Erfindung anhand von Zeichnungen näher erläutert. Es zeigen:
Fig. 1 eine perspektivische Ansicht einer Ausgleichskupplung gemäß einem ersten Ausführungsbeispiel, bei dem eine Außenkontur einer Innennabe und eine Innenkontur einer Hohlnabe jeweils als formschlüssig ineinandergreifende Circulo-Dreiecke ausgebildet sind,
Fig. 2 eine axiale Draufsicht der Ausgleichskupplung gemäß dem in Fig. 1 dargestellten Ausführungsbeispiel,
Fig. 3 einen Längsschnitt durch die Ausgleichskupplung gemäß dem in Fig. 1 dargestellten Ausführungsbeispiel,
Fig. 4a eine schematische Darstellung einer als Circulo-Dreieck ausgebildeten Außenkontur und/oder Innenkontur,
Figur 4b eine schematische Darstellung einer als Circulo-Viereck ausgebildeten Außenkontur und/oder Innenkontur,
Fig. 4c eine schematische Darstellung einer als Circulo-Fünfeck ausgebildeten Außenkontur und/oder Innenkontur und
Fig. 5 eine elastische Doppel-Torsionskupplung mit einer ersten und zweiten Ausgleichskupplung, die über ein Verbindungsrohr miteinander verbunden sind.

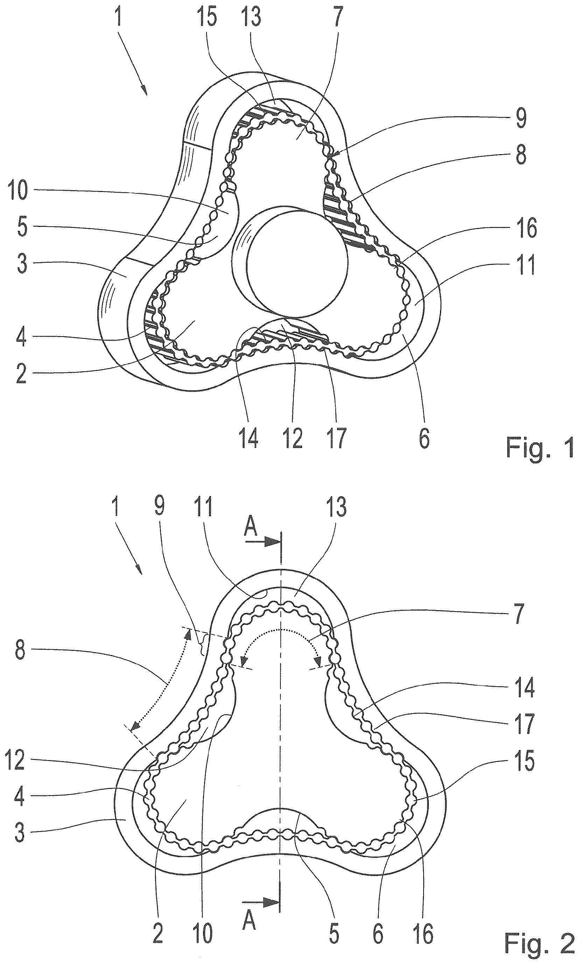

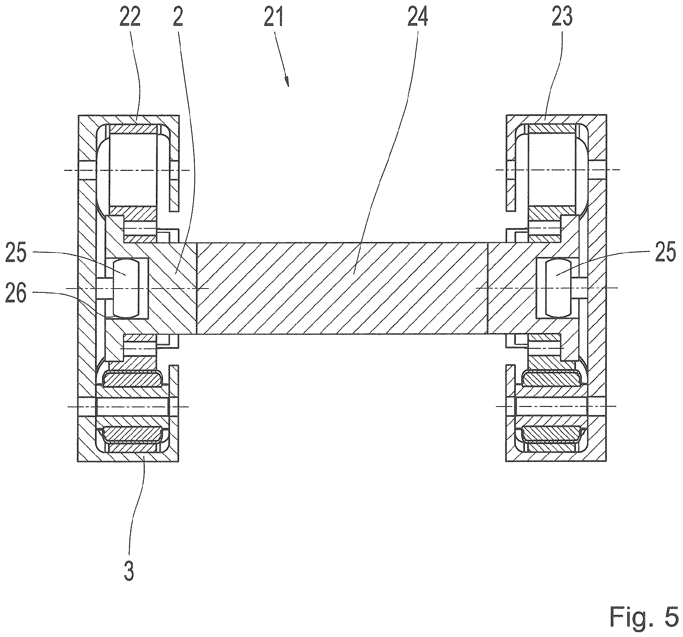

In den Figuren 1, 2 und 3 ist ein erstes Ausführungsbeispiel einer Ausgleichskupplung 1 dargestellt. Die Ausgleichskupplung 1 ist vorzugsweise für den Einsatz in einem Schienenfahrzeug vorgesehen. Hier wird sie im Antriebsstrang, der im Wesentlichen einen Antrieb, ein Getriebe und einen darüber antreibbaren Radwellensatz umfasst, antriebsseitig verbaut. Die Ausgleichskupplung 1 kann hierbei zwischen dem Antrieb und dem Getriebe antriebsseitig verbaut sein, um die Antriebswelle des Antriebs und die Eingangswelle des Getriebes torsionselastisch, achsversatzausgleichend und/oder beugewinkelausgleichend miteinander zu verbinden. Ebenso ist es denkbar, dass die Ausgleichskupplung Bestandteil einer elastischen Doppel-Torsionskupplung ist. Eine derartige Doppel-Torsionskupplung ist beispielsweise in Fig. 5 dargestellt, bei der zwei, nachstehend im Detail beschriebene, Ausgleichskupplungen, über ein dazwischen angeordnetes Verbindungsrohr miteinander gekoppelt sind.

Insbesondere gemäß der in Fig. 1 dargestellten perspektivischen Ansicht sowie der in Fig. 2 dargestellten axialen Draufsicht umfasst die Ausgleichskupplung 1 eine Innennabe 2, die mit einer hier nicht dargestellten ersten Welle verbunden werden kann. Die Innennabe 2 ist von einer Hohlnabe 3 der Ausgleichskupplung 1 umschlossen. Mit der Hohlnabe 3 kann eine hier ebenfalls nicht dargestellte zweite Welle drehfest verbunden werden. Die Hohlnabe 3 umschließt die Innennabe 2 in Umfangsrichtung. Die Innennabe 2 ist somit im Innenraum der Hohlnabe 3 angeordnet.

Des Weiteren ist die Hohlnabe 3 von der Innennabe 2 beabstandet, so dass zwischen diesen beiden ein Spalt ausgebildet ist. Zur Ausbildung einer Torsionselastizität umfasst die Ausgleichskupplung 1 ferner ein Ausgleichselement 4. Das Ausgleichselement 4 ist zwischen den beiden Naben 2, 3 angeordnet. Es befindet sich somit im Spalt zwischen der Innennabe 2 und der Hohlnabe 3. Das Ausgleichselement 4 ist elastisch ausgebildet. Durch diese elastisch federnde Wirkung des Ausgleichselementes 4 wird die Ausgleichskupplung 1 torsionselastisch, so dass Drehungleichförmigkeiten des übertragenen Drehmomentes und daraus gegebenenfalls resultierende Schwingungen gedämpft werden.

Wie insbesondere gemäß Fig. 1 und Fig. 2 ersichtlich ist, weist die Ausgleichskupplung 1, vorzugsweise die Innenkontur 6 und die Außenkontur 5, eine von einer gewöhnlichen kreisrunden Form abweichende unrunde Form auf. Hierdurch kann vermieden werden, dass die Drehmomente zwischen der Innennabe 2 und der Hohlnabe 3 nicht ausschließlich über auf das Ausgleichselement 4 einwirkende Scherkräfte übertragen wird. Derartige Scherkräfte können nämlich von dem Ausgleichselement 4 schlechter kompensiert werden als Druckkräften, so dass das Ausgleichselement 4 bei einer kreisrunden Ausgleichskupplung 1 eine relativ geringe Lebensdauer hat.

Im Gegensatz dazu weist die vorliegende Ausgleichskupplung 1 eine Außenkontur 5 auf. Die Hohlnabe 3 weist eine Innenkontur 6 auf. Sowohl die Außenkontur 5 als auch die Innenkontur 6 sind unrund ausgebildet. Sie weisen demnach eine von einer kreisrunden Form abweichende Kontur auf. Die Außenkontur 5 der Innennabe 2 und die Innenkontur 6 der Hohlnabe 3 sind derart geformt, dass die Innennabe 2 und die Hohlnabe 3 in Umfangsrichtung formschlüssig ineinandergreifen. Hierdurch könnte somit auch ohne ein dazwischen angeordnetes Ausgleichselement 4 Drehmomente zwischen den beiden Naben 2, 3 übertragen werden. Aufgrund der formschlüssig ineinandergreifenden Naben 2, 3 wird das Ausgleichselement 4 bei Drehmomentübertragung zwischen der Innenkontur 6 der Hohlnabe 3 und der Außenkontur 5 der Innennabe 2 verpresst bzw. zusammengedrückt. Hierdurch wird das Ausgleichselement 4 vorteilhafterweise zumindest teilweise mit einer Druckkomponente beaufschlagt. Da Druckkräften im Vergleich zu Scherkräften geringeren Stress im elastischen Material des Ausgleichselementes 4 hervorrufen, kann hierdurch die Lebensdauer des Ausgleichselementes 4 erhöht werden. Des Weiteren kann selbst bei beschädigtem oder gerissenem Ausgleichselement 4 aufgrund des formschlüssigen Ineinandergreifens eine Drehmomentübertragung zwischen Innennabe 2 und Hohlnabe 3 sichergestellt werden.

Wie insbesondere aus Fig. 2 hervorgeht liegt das Ausgleichselement 4 nicht über seinen gesamten Umfang hinweg an der Außenkontur 5 der Innennabe 2 und an der Innenkontur 6 der Hohlnabe 3 an. Stattdessen weist die Außenkontur 5 zumindest einen Außenkontaktabschnitt 7 und die Innenkontur 6 zumindest einen Innenkontaktabschnitt 8 auf. Das Ausgleichselement 4 liegt hierbei mit einer radial inneren Seite am Außenkontaktabschnitt 7 der Innennabe 2 und mit einer radial äußeren Seite am Innenkontaktabschnitt 8 der Hohlnabe 3 an.

Der Außenkontaktabschnitt 7 und der Innenkontaktabschnitt 8 sind zueinander entgegengesetzt gekrümmt. Sowohl der Außenkontaktabschnitt 7 als auch der Innenkontaktabschnitt 8 sind gemäß dem vorliegenden Ausführungsbeispiel konvex gekrümmt, so dass das Ausgleichselement 4 an dieser über ihre gesamte Länge anliegt. Des Weiteren geht aus Fig. 2 hervor, dass der Außenkontaktabschnitt 7 und der Innenkontaktabschnitt 8 zueinander in unterschiedlichen Winkelintervallen angeordnet sind. Die beiden Kontaktabschnitte 7, 8 sind somit in Umfangsrichtung der Ausgleichskupplung 1 zueinander versetzt angeordnet.

Gemäß dem vorliegenden Ausführungsbeispiel überlappen sich die beiden Kontaktabschnitte 7, 8 in Umfangsrichtung. Infolgedessen weist der Innenkontaktabschnitt 8 und der Außenkontaktabschnitt 7 einen gemeinsamen Überlappungsbereich 9 auf. In diesem Überlappungsbereich 9 liegt das Ausgleichselement 4 sowohl an seiner radial äußeren Seite an dem Innenkontaktabschnitt 8 als auch an seiner radial inneren Seite an dem Außenkontaktabschnitt 7 an.

In den übrigen Bereichen liegt das Ausgleichselement 4 jeweils nur an einer Seite, nämlich entweder an der Außenkontur 5 oder an der Innenkontur 6 an. Dies wird durch Ausgriffsabschnitte 10, 11 sichergestellt. Demnach weist die Außenkontur 5 der Innennabe 2 zumindest einen Ausgriffsabschnitt 10 auf, der sich in Umfangsrichtung der Innennabe 2 an den Außenkontaktabschnitt 7 anschließt. Der Ausgriffsabschnitt 10 der Innennabe 2 ist dem Innenkontaktabschnitt 8 der Hohlnabe 3 gegenüberliegend angeordnet. Infolgedessen liegt das Ausgleichselement 4 in diesem Bereich ausschließlich an der Hohlnabe 3, nämlich im Innenkontaktabschnitt 8, an. Von der Innennabe 2 ist das Ausgleichselement 4 in diesem Bereich beabstandet. Zwischen dem Ausgleichselement 4 und der Innennabe 2 ist somit ein Innenhohlraum 12 ausgebildet.

In analoger Weise umfasst die Hohlnabe 3 auch zumindest einen Ausgriffsabschnitt 11. Der Ausgriffsabschnitt 11 der Hohlnabe 3 schließt sich in Umfangsrichtung an den Innenkontaktabschnitt 8 an. Der Ausgriffsabschnitt 11 der Hohlnabe 3 ist dem Außenkontaktabschnitt 7 der Innennabe 2, insbesondere in Radialrichtung, gegenüberliegend angeordnet. Infolgedessen liegt das Ausgleichselement 4 auch in diesem Bereich ausschließlich an einer der beiden Naben 2, 3 an. Demnach liegt das Ausgleichselement 4 in diesem Abschnitt an seiner radial inneren Seite im Außenkontaktabschnitt 7 an der Innennabe 2 an, wohingegen es auf seiner radial äußeren Seite zum Ausgriffsabschnitt 11 der Hohlnabe 3 einen Abstand aufweist. Zwischen der Hohlnabe 3, insbesondere ihrem Ausgriffsabschnitt 11, und dem Ausgleichselement 4 ist somit ein Außenhohlraum 13 ausgebildet.

Das Ausgleichselement 4 schmiegt sich an den Außenkontaktabschnitt 7 der Innennabe 2 an und geht fließend, im Wesentlichen tangential, auf den Innenkontaktabschnitt 8 der Hohlnabe 3 über.

Die beiden Ausgriffsabschnitte 10, 11 der Innennabe 2 bzw. der Hohlnabe 3 sind vorliegend konkav gekrümmt. Alternativ könnten diese aber auch keine gebogene sondern eine eckige Form aufweisen. Mittels der gebogenen Konkavform kann jedoch die Außenkontur 5 bzw. die Innenkontur 6 kostengünstiger hergestellt werden.

Der Außenkontaktabschnitt 7 ist im Vergleich zum Innenkontaktabschnitt 8 stärker gekrümmt. Ebenso ist auch der Ausgriffsabschnitt 10 der Innennabe 2 im Vergleich zum Ausgriffsabschnitt 11 der Hohlnabe 3 stärker gekrümmt.

Gemäß Fig. 2 wird infolgedessen bei einer Relativverdrehung der Innennabe 2 gegenüber der Hohlnabe 3 entgegen den Uhrzeigersinn aufgrund des formschlüssigen Ineinandergreifens der beiden Naben 2, 3 das Ausgleichselement 4 zwischen einem Teilbereich des Außenkontaktabschnitts 7 und einen Teilbereich des Innenkontaktabschnitts 8 elastisch zusammengedrückt. Wie bereits vorstehend erwähnt, können hierdurch die auf das Ausgleichselement 4 einwirkenden Scherkräfte reduziert und die Druckkräfte erhöht werden. Gemäß dem vorliegenden Ausführungsbeispiel erfolgt dieses Zusammendrücken des Ausgleichselementes 4 im Wesentlichen im Überlappungsbereich 9. Hierdurch kann die Ausgleichskupplung 1 torsionselastisch ausgebildet werden, so dass Drehungleichförmigkeiten übertragenen Drehmoments kompensiert werden können.

In einem hier nicht dargestellten Ausführungsbeispiel ist es ebenso auch denkbar, dass der Außenkontaktabschnitt 7 und der Innenkontaktabschnitt 8 nicht überlappen, sondern vorzugsweise unmittelbar aneinander angrenzen oder voneinander beabstandet sind. Hierdurch würde demnach erst beim elastischen Verformen des Ausgleichselementes während der Drehmomentübertragung ein entsprechender Überlappungsbereich 9 ausgebildet werden.

Gemäß Fig. 2 ist das Ausgleichselement 4 in Umfangsrichtung auf Spannung gehalten. Somit kann sichergestellt werden, dass sich das Ausgleichselement 4 gegenüber den beiden Naben 2, 3 nicht verschiebt. Um die Spannung des Ausgleichselementes 4 einstellen zu können, ist es vorteilhaft, wenn der Außenkontaktabschnitt 7 und/oder der Innenkontaktabschnitt 8 radial nach innen und/oder radial nach außen bewegbar sind. Alternativ ist es ebenso auch denkbar, dass die Krümmung des Außenkontaktabschnitts 7 und/oder des Innenkontaktabschnitts 8 veränderbar ist.

Gemäß dem vorliegenden Ausführungsbeispiel ist das Ausgleichselement 4 als Zahnriemen ausgebildet. Er weist demnach eine Innenverzahnung 14 und eine Außenverzahnung 15 auf. Des Weiteren weist die Innennabe 2 an ihrer Außenkontur 5 zumindest im Bereich des Außenkontaktabschnitts 7 eine Innennabenverzahnung 16 auf. Ebenso weist die Hohlnabe 3 an ihrer Innenkontur 6 eine Hohlnabenverzahnung 17 auf. Diese ist gemäß Figur 2 zumindest im Innenkontaktabschnitt 8 ausgebildet.

Die Innennabenverzahnung 16 und die Hohlnabenverzahnung 17 greifen nicht ineinander, sondern weisen zueinander einen Abstand auf. Zwischen den Zahnköpfen der gegenüberliegenden Verzahnungen ist somit ein Abstand bzw. Spalt ausgebildet. In diesem radialen Spalt zwischen Innennabenverzahnung 16 und Hohlnabenverzahnung 17 ist das vorzugsweise als Zahnriemen ausgebildete Ausgleichselement 4 angeordnet. Im Bereich des Innenkontaktabschnitts 8 greift das Ausgleichselement 4 mit seiner Außenverzahnung 16 in die Hohlnabenverzahnung 17 ein. Im Außenkontaktabschnitt 7 greift das Ausgleichselement 4 mit seiner Innenverzahnung 14 in die Innennabenverzahnung 16. Hierdurch kann ein Verrutschen des Zahnriemens bzw. des Ausgleichselementes 4 in Umfangsrichtung vermieden werden.

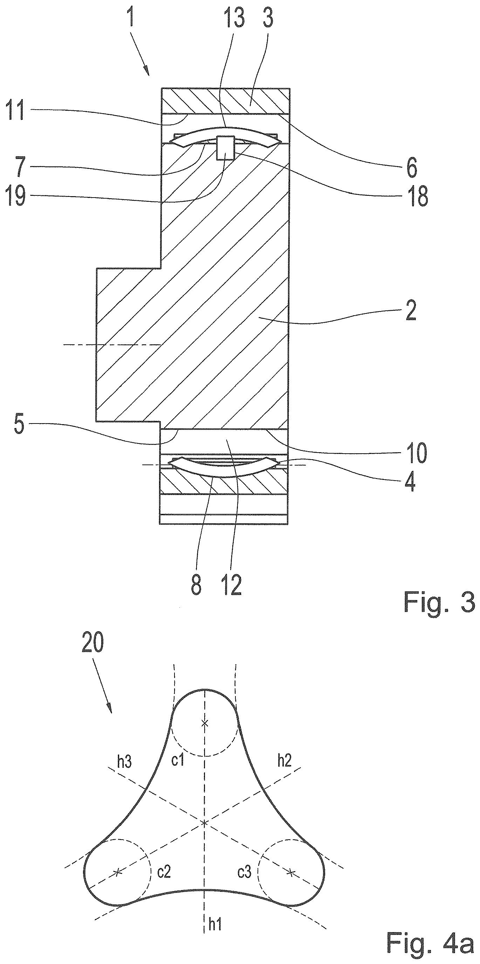

Der Innenhohlraum 12 und/oder der Außenhohlraum 13 begünstigen unter anderem den Ausgleich größere Beugewinkel. Demnach erlaubt der Innenhohlraum 12 und/oder der Außenhohlraum 13 ein stärkeres Verkippen der beiden Naben 2, 3 zueinander. Dies kann zusätzlich oder alternativ dadurch begünstigt werden, wenn der Außenkontaktabschnitt 7 gemäß dem in Fig. 3 dargestellten Axialschnitt ballig ausgebildet ist. Zusätzlich oder alternativ kann gemäß Fig. 3 auch der Innenkontaktabschnitt 8 ballig ausgebildet sein. Hierbei weist der Innenkontaktabschnitt 8 jedoch vorzugsweise eine an die konvexe Ballenform des Außenkontaktabschnitts 7 angepasste konkave Ballenform auf.

Um ein seitliches Abrutschen des Ausgleichselementes 4 von der Innennabe 2 und/oder von der Hohlnabe 3 vermeiden zu können, ist es vorteilhaft, wenn das Ausgleichselement 4 und der Außenkontaktabschnitt 7 eine sich in Umfangsrichtung erstreckende Nut 18 sowie einen darin formschlüssig eingreifenden Steg 19 aufweisen. Gemäß dem vorliegenden Ausführungsbeispiel ist der Steg 19 an der radialen Innenseite des Ausgleichselementes 4 angeordnet und greift in die an der Außenkontur 5 ausgebildete Nut 18 ein. Es versteht sich von selbst, dass der Steg 19 ebenso auch in der Innennabe 2 und die Nut 18 im Ausgleichselement 4 ausgebildet sein können. Zusätzlich oder alternativ kann eine entsprechende axiale Zentrierung in analoger Weise zwischen dem Ausgleichselement 4 und dem Innenkontaktabschnitt 8 der Hohlnabe 3 ausgebildet sein.

Wie aus dem insbesondere in Fig. 2 dargestellten Ausführungsbeispiel hervorgeht, sind die vorstehend beschriebenen Merkmale einzeln oder in beliebiger Kombination alternierend über den Umfang hinweg angeordnet. So weisen die als Circulo-Dreieck ausgebildete Außenkontur 5 sowie Innenkontur 6 drei entsprechend ausgebildete Bereiche auf. Infolgedessen weist die Ausgleichskupplung 1 drei Außenkontaktabschnitte 7, drei Innenkontaktabschnitte 8 und jeweils drei Ausgriffsabschnitte 10, 11 auf. Des Weiteren weist die Ausgleichskupplung 1 gemäß diesem Ausführungsbeispiel sechs Überlappungsbereiche 9 auf. Aus Gründen der Übersichtlichkeit ist jedoch jeweils nur einer dieser Abschnitte bzw. Bereiche mit einem Bezugszeichen versehen.

In einem hier nicht dargestellten alternativen Ausführungsbeispiel ist es aber auch ebenso denkbar, dass die Ausgleichskupplung 1 jeweils nur zwei der vorstehend genannten Abschnitte sowie nur vier Überlappungsbereiche 9 aufweist. Die Innennabe 2 könnte demnach im Wesentlichen eine Knochenform aufweisen. Die Hohlnabe 3 könnte ferner als Oval oder Ellipse ausgebildet sein.

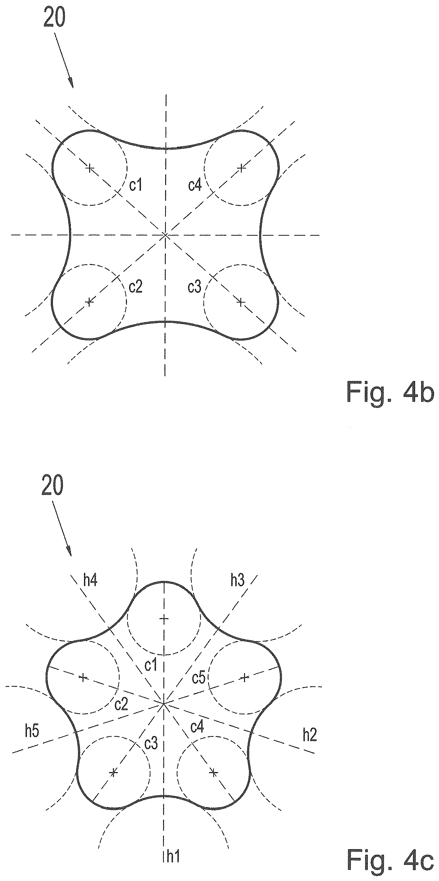

Alternativ könnte die Ausgleichskupplung 1 gemäß Fig. 4b und 4c aber auch ebenso mehr als drei derartige Abschnitte aufweisen. Demnach könnte die Außenkontur 5 und/oder die Innenkontur 6 gemäß Fig. 4b als Circulo-Dreieck oder gemäß Fig. 4c als Circulo-Fünfeck ausgebildet sein.

In den Figuren 4a, 4b und 4c sind unterschiedliche Ausführungsformen eines Circulo-Polygons 20 dargestellt. Ein Circulo-Polygon zeichnet sich dadurch aus, dass sich sein Umfang aus mehreren Kreissegmenten zusammensetzt. Alternativ oder zusätzlich können alle oder einzelne Segmente aber auch als Bogensegmente, insbesondere Ellipsoid-Segmente, ausgebildet sein. Des Weiteren können auch Teilabschnitte des Circulo-Polygons als Geraden ausgebildet sein. Wie aus den Figuren 4a, 4b und 4c hervorgeht, resultieren die Circulo-Polygone gemäß dem vorliegenden Ausführungsbeispiel aus Teilsegmenten von radial inneren Kreisen c1 bis c5 und radial äußeren Kreisen h1 bis h5.

Fig. 5 zeigt eine elastische Doppel-Torsionskupplung 21. Diese umfasst zwei Ausgleichskupplungen 22, 23, die gemäß der vorangegangenen Beschreibung ausgebildet sein können. Hierbei können die vorstehend genannten Merkmale einzelnen oder in beliebiger Kombination vorhanden sein. Die beiden Ausgleichskupplungen 22, 23 sind über ein Verbindungsrohr 24 miteinander verbunden. Das Verbindungsrohr 24 ist vorliegend mit den beiden Innennaben 2 der jeweiligen Ausgleichskupplung 22, 23 verbunden. Um eine Unwucht durch elastische Verformung zu vermeiden, weist zumindest eine der beiden Ausgleichskupplungen 22, 23, gemäß dem vorliegenden Ausführungsbeispiele beide, ein Zentrierelement 25 auf. Dieses Zentrierelement 25 zentriert die Innennabe 2 in der Hohlnabe 3. Ein derartiges Zentrierelement 25 kann vorgesehen werden, wenn kein Radialversatz zwischen den beiden Naben 2, 3 ausgeglichen werden muss. Die Zentrierung kann über ein als Gleitlager ausgebildetes Zentrierelement 25 erfolgen. Hierbei ist mindestens eine Gleitfläche 26 des Zentrierelementes 25 sphärisch ausgebildet. Alternativ kann das Zentrierelement 25 aber auch ein Wälzlager, z.B. ein Pendelrollenlager, sein. Hierbei kann der Außenring oder der Innenring des Wälzlager axial verschieblich im jeweils anderen Teil der Nabe 2, 3 gelagert sein.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichen

- 1: Ausgleichskupplung
- 2: Innennabe
- 3: Hohlnabe
- 4: Ausgleichselement
- 5: Außenkontur
- 6: Innenkontur
- 7: Außenkontaktabschnitt
- 8: Innenkontaktabschnitt
- 9: Überlappungsbereich
- 10: Ausgriffsabschnitt der Innennabe
- 11: Ausgriffsabschnitt der Hohlnabe
- 12: Innenhohlraum
- 13: Außenhohlraum
- 14: Innenverzahnung
- 15: Außenverzahnung
- 16: Innennabenverzahnung
- 17: Hohlnabenverzahnung
- 18: Nut
- 19: Steg
- 20: Circulo-Polygon
- 21: Doppel-Torsionskupplung
- 22: erste Ausgleichskupplung
- 23: zweite Ausgleichskupplung
- 24: Verbindungsrohr
- 25: Zentrierelement
- 26: Gleitfläche

## Patentansprüche

1. Ausgleichskupplung für ein Schienenfahrzeug und dort zum antriebsseitigen Einsatz, mit einer Innennabe (2) zum drehfesten Verbinden mit einer ersten Welle, mit einer Hohlnabe (3) zur drehfesten Verbindung mit einer zweiten Welle, die die Innennabe (2) in Umfangsrichtung umschließt und von dieser beabstandet ist, und mit einem elastischen Ausgleichselement (4) zum torsionselastischen, achsversatz ausgleichenden und/oder beugewinkelausgleichenden Verbinden der beiden Naben, das zwischen diesen beiden Naben angeordnet ist und die Innennabe (2) in Umfangsrichtung umschließt, wobei die Innennabe (2) eine derart geformte Außenkontur (5) und die Hohlnabe (3) eine derart mit dieser korrespondierende Innenkontur (6) aufweisen, dass die beiden Naben zur Drehmomentübertragung in Umfangsrichtung formschlüssig ineinandergreifen, **dadurch gekennzeichnet, dass** die Außenkontur (5) und Innenkontur (6) jeweils zumindest einen Ausgriffsabschnitt (10, 11) aufweisen, in dem das Ausgleichselement (4) von der jeweiligen Nabe beabstandet ist.

2. Ausgleichskupplung nach dem vorherigen Anspruch, **dadurch gekennzeichnet, dass** die beiden Naben derart ineinandergreifen, dass das Ausgleichselement (4) bei Drehmomentübertragung zwischen der Innenkontur (6) und der Außenkontur (5) verpressbar und zumindest teilweise auf Druck beanspruchbar ist.

3. Ausgleichskupplung nach einem oder mehreren der vorherigen Ansprüche, **dadurch gekennzeichnet, dass** die Außenkontur (5) zumindest einen Außenkontaktabschnitt (7) und die Innenkontur (6) zumindest einen Innenkontaktabschnitt (8) aufweist, in dem das Ausgleichselement (4) an der jeweiligen Nabe anliegt.

4. Ausgleichskupplung nach Anspruch 3, **dadurch gekennzeichnet, dass** der Außenkontaktabschnitt (7) und der Innenkontaktabschnitt (8) konvex gekrümmt und diese zueinander in Umfangsrichtung versetzt angeordnet sind.

5. Ausgleichskupplung nach einem der Anspruch 3 bis 4, **dadurch gekennzeichnet, dass** der Innenkontaktabschnitt (8) und der Außenkontaktabschnitt (7) einen gemeinsamen Überlappungsbereich (9) aufweisen.

6. Ausgleichskupplung nach einem der vorherigen Ansprüche, **dadurch gekennzeichnet, dass** der Ausgriffsabschnitt (10, 11) der Außenkontur (5) und/oder der Innenkontur (6) konkav gekrümmt und/oder in Radialrichtung dem Kontaktabschnitt der jeweils anderen Nabe gegenüberliegend angeordnet ist.

7. Ausgleichskupplung nach einem oder mehreren der vorherigen Ansprüche, **dadurch gekennzeichnet, dass** zwischen der Innennabe (2) und dem Ausgleichselement (4) zumindest ein Innenhohlraum und/oder zwischen der Hohlnabe (3) und dem Ausgleichselement (4) zumindest ein Außenhohlraum (13) ausgebildet ist.

8. Ausgleichskupplung nach einem der vorherigen Ansprüche, **dadurch gekennzeichnet, dass** der Ausgriffsabschnitt (10) der Außenkontur (5) und der Innenhohlraum (12) in Umfangsrichtung zwischen zwei Außenkontaktabschnitten (7) ausgebildet ist und dass der Ausgriffsabschnitt (11) der Innenkontur (6) und der Außenhohlraum (13) in Umfangsrichtung zwischen zwei Innenkontaktabschnitten (8) ausgebildet ist.

9. Ausgleichskupplung nach einem der Ansprüche 3 bis 8, **dadurch gekennzeichnet, dass** sich die Außenkontur (5) und/oder die Innenkontur (6) über ihren gesamten Umfang hinweg, vorzugsweise abwechselnd, aus mehreren Außenkontakt-, Innenkontakt- und/oder Ausgriffsabschnitten zusammensetzen, die ineinander übergehen.

10. Ausgleichskupplung nach einem oder mehreren der vorherigen Ansprüche, **dadurch gekennzeichnet, dass** die Außenkontakt-, Innenkontakt- und/oder Ausgriffsabschnitte als Kreissegmente ausgebildet sind und/oder die Form der Außenkontur (5) und/oder der Innenkontur (6) ein Circulo-Polygon, insbesondere ein Circulo-Dreieck, Circulo-Viereck und/oder Circulo-Fünfeck, ist.

11. Ausgleichskupplung nach einem der Ansprüche 3 bis 10, **dadurch gekennzeichnet, dass** der Außenkontaktabschnitt (7) der Innennabe (2) und/oder der Innenkontaktabschnitt (8) der Hohlnabe (3) zum Spannen des Ausgleichselements (4) in Radialrichtung verstellbar ist.

12. Ausgleichskupplung nach einem oder mehreren der vorherigen Ansprüche, **dadurch gekennzeichnet, dass** die Innennabe (2) und/oder die Hohlnabe (3) zur Wartung oder zum Austausch des Ausgleichselement (4)s mehrteilig und/oder teilbar ausgebildet ist.

13. Ausgleichskupplung nach einem der Ansprüche 3 bis 12, **dadurch gekennzeichnet, dass** der Außenkontaktabschnitt (7) und/oder der Innenkontaktabschnitt (8) im Axialschnitt ballig ausgebildet sind.

14. Ausgleichskupplung nach einem der Ansprüche 3 bis 14, **dadurch gekennzeichnet, dass** das Ausgleichselement (4) zur axialen Zentrierung eine sich in Umfangsrichtung erstreckende Nut und/oder einen Steg aufweist, der formschlüssig in einen sich in Umfangsrichtung erstreckenden Zentriersteg und/oder eine Zentriernut des Außenkontaktabschnitts (7) und/oder des Innenkontaktabschnitts (8) eingreift.

15. Ausgleichskupplung nach einem oder mehreren der vorherigen Ansprüche, **dadurch gekennzeichnet, dass** das Ausgleichselement (4) in einem Verschlussbereich teilbar ist und der Verschlussbereich zur Außenkontur (5) und/oder zur Innenkontur (6) beabstandet ist.

16. Ausgleichskupplung nach einem oder mehreren der vorherigen Ansprüche, **dadurch gekennzeichnet, dass** das Ausgleichselement (4) zumindest einen, insbesondere armierten, Zahnriemen umfasst, der formschlüssig, kraftschlüssig und/oder stoffschlüssig an dessen Verzahnung befestigte Eingriffselemente aufweist, und dass der Außenkontaktabschnitt (7) und/oder der Innenkontaktabschnitt (8) eine Verzahnung aufweisen.

17. Ausgleichskupplung nach einem oder mehreren der vorherigen Ansprüche, **dadurch gekennzeichnet, dass** das Ausgleichselement (4) einen mit der Innennabe (2) verzahnten Innenzahnriemen, einen mit der Hohlnabe (3) verzahnten Außenzahnriemen und ein zwischen diesen beiden angeordnetes oder mit diesen verzahntes Zwischenelement umfasst, wobei das Zwischenelement unelastisch ist.

18. Ausgleichskupplung nach einem oder mehreren der vorherigen Ansprüche, **dadurch gekennzeichnet, dass** die Ausgleichskupplung ein Zentrierelement aufweist, das die Innennabe (2) in der Hohlnabe (3) zentriert, wobei das Zentrierelement ein Gleitlager mit zumindest einer sphärischen Gleitfläche oder ein axial verschiebbares Wälzlager ist.

19. Antriebsstrang, insbesondere für ein Schienenfahrzeug, mit einem Antrieb, insbesondere einem Elektromotor, einem Getriebe, einem antreibbaren Radwellensatz und einer torsionselastischen Ausgleichskupplung, die antriebsseitig zwischen dem Antrieb und dem Getriebe oder abtriebsseitig zwischen dem Getriebe und dem Radwellensatz angeordnet ist, **dadurch gekennzeichnet, dass** die Ausgleichskupplung nach einem oder mehreren der vorherigen Ansprüche ausgebildet ist.

## Claims

1. Compensating coupling for a rail vehicle and for the drive-side use there, having an inner hub (2) for connecting fixedly to a first shaft so as to rotate with it, having a hollow hub (3) for connecting fixedly to a second shaft so as to rotate with it, which second shaft encloses the inner hub (2) in the circumferential direction and is spaced apart from it, and having an elastic compensating element (4) for connecting the two hubs in a torsionally elastic manner which compensates for an axial offset and/or compensates for an articulation angle, which elastic compensating element (4) is arranged between the said two hubs and encloses the inner hub (2) in the circumferential direction, the inner hub (2) having an outer contour (5) which is shaped in such a way that, and the hollow hub (3) having an inner contour (6) which corresponds with the said outer contour (5) in such a way that the two hubs engage into one another in a positively locking manner in the circumferential direction for the transmission of torque, **characterized in that** the outer contour (5) and the inner contour (6) have in each case at least one outwardly extending section (10, 11), in which the compensating element (4) is spaced apart from the respective hub.

2. Compensating coupling according to the preceding claim, **characterized in that** the two hubs engage into one another in such a way that, in the case of the transmission of torque, the compensating element (4) can be pressed between the inner contour (6) and the outer contour (5) and can be subjected at least partially to a compressive load.

3. Compensating coupling according to one or more of the preceding claims, **characterized in that** the outer contour (5) has at least one outer contact section (7), and the inner contour (8) has at least one inner contact section (8), in which the compensating element (4) bears against the respective hub.

4. Compensating coupling according to Claim 3, **characterized in that** the outer contact section (7) and the inner contact section (8) are curved convexly and are arranged offset in the circumferential direction with respect to one another.

5. Compensating coupling according to either of Claims 3 and 4, **characterized in that** the inner contact section (8) and the outer contact section (7) have a common overlap region (9).

6. Compensating coupling according to one of the preceding claims, **characterized in that** the outwardly extending section (10, 11) of the outer contour (5) and/or the inner contour (6) is curved concavely and/or is arranged so as to lie opposite the contact section of the respective other hub in the radial direction.

7. Compensating coupling according to one or more of the preceding claims, **characterized in that** at least one inner cavity is configured between the inner hub (2) and the compensating element (4), and/or at least one outer cavity (13) is configured between the hollow hub (3) and the compensating element (4).

8. Compensating coupling according to one of the preceding claims, **characterized in that** the outwardly extending section (10) of the outer contour (5) and the inner cavity (12) is configured between two outer contact sections (7) in the circumferential direction, and **in that** the outwardly extending section (11) of the inner contour (6) and the outer cavity (13) is configured between two inner contact sections (8) in the circumferential direction.

9. Compensating coupling according to one of Claims 3 to 8, **characterized in that** the outer contour (5) and/or the inner contour (6) are/is composed over their/its entire circumference, preferably in an alternating manner, of a plurality of outer contact sections, inner contact sections and/or outwardly extending sections which merge into one another.

10. Compensating coupling according to one or more of the preceding claims, **characterized in that** the outer contact sections, inner contact sections and/or outwardly extending sections are configured as circle segments, and/or the shape of the outer contour (5) and/or the inner contour (6) is a circulo-polygon, in particular a circulo-triangle, a circulo-square and/or circulo-pentagon.

11. Compensating coupling according to one of Claims 3 to 10, **characterized in that** the outer contact section (7) of the inner hub (2) and/or the inner contact section (8) of the hollow hub (3) are/is adjustable in the radial direction for clamping the compensating element (4).

12. Compensating coupling according to one or more of the preceding claims, **characterized in that** the inner hub (2) and/or the hollow hub (3) are/is of multiple-piece and/or separable configuration for maintenance or for replacement of the compensating element (4).

13. Compensating coupling according to one of Claims 3 to 12, **characterized in that** the outer contact section (7) and/or the inner contact section (8) are/is of crowned configuration in axial section.

14. Compensating coupling according to one of Claims 3 to 14, **characterized in that**, for axial centring, the compensating element (4) has a web and/or a groove which extend/extends in the circumferential direction and engage/engages in a positively locking manner into a centring groove and/or centring web, which extend/extends in the circumferential direction, of the outer contact section (7) and/or the inner contact section (8).

15. Compensating coupling according to one or more of the preceding claims, **characterized in that** the compensating element (4) is separable in a closure region, and the closure region is spaced apart from the outer contour (5) and/or from the inner contour (6).

16. Compensating coupling according to one or more of the preceding claims, **characterized in that** the compensating element (4) comprises at least one toothed belt which is, in particular, reinforced and has engagement elements which are fastened to its toothing system in a positively locking, non-positive and/or integrally joined manner, and **in that** the outer contact section (7) and/or the inner contact section (8) have/has a toothing system.

17. Compensating coupling according to one or more of the preceding claims, **characterized in that** the compensating element (4) comprises an inner toothed belt which is interlocked with the inner hub (2), an outer toothed belt which is interlocked with the hollow hub (3), and an intermediate element which is arranged between the two said toothed belts or is interlocked with the two said toothed belts, the intermediate element being inelastic.

18. Compensating coupling according to one or more of the preceding claims, **characterized in that** the compensating coupling has a centring element which centres the inner hub (2) in the hollow hub (3), the centring element being a plain bearing with at least one spherical sliding face, or an axially displaceable anti-friction bearing.

19. Drive train, in particular for a rail vehicle, having a drive, in particular an electric motor, a transmission, a drivable wheel shaft set and a torsionally elastic compensating coupling which is arranged on the drive side between the drive and the transmission or on the output side between the transmission and the wheel shaft set, **characterized in that** the compensating coupling is configured according to one or more of the preceding claims.

## Revendications

1. Accouplement compensateur pour un véhicule ferroviaire et destiné à être utilisé dans celui-ci du côté de l'entraînement, comprenant un moyeu intérieur (2) destiné à être relié de manière solidaire en rotation à un premier arbre, un moyeu creux (3) destiné à être relié de manière solidaire en rotation à un deuxième arbre, lequel moyeu creux entoure le moyeu intérieur (2) dans la direction périphérique et est espacé de celui-ci, et un élément compensateur élastique (4) servant à relier les deux moyeux de manière élastique en torsion, de manière à compenser le décalage axial et/ou de manière à compenser l'angle de flexion, lequel élément compensateur est disposé entre ces deux moyeux et entoure le moyeu intérieur (2) dans la direction périphérique, le moyeu intérieur (2) comprenant un contour extérieur (5) formé de telle manière et le moyeu creux (3) comprenant un contour intérieur (6) correspondant à celui-ci de telle manière que les deux moyeux viennent en prise l'un dans l'autre par complémentarité de forme dans la direction périphérique pour la transmission de couple, **caractérisé en ce que** le contour extérieur (5) et le contour intérieur (6) comprennent respectivement au moins une partie de dégagement (10, 11) dans laquelle l'élément compensateur (4) est espacé du moyeu respectif.

2. Accouplement compensateur selon la revendication précédente, **caractérisé en ce que** les deux moyeux viennent en prise l'un dans l'autre de telle sorte que l'élément compensateur (4) puisse être, lors de la transmission de couple, pressé entre le contour intérieur (6) et le contour extérieur (5) et être sollicité en compression au moins partiellement.

3. Accouplement compensateur selon l'une ou plusieurs des revendications précédentes, **caractérisé en ce que** le contour extérieur (5) comprend au moins une partie de contact extérieure (7) et le contour intérieur (6) comprend au moins une partie de contact intérieure (8) dans laquelle l'élément compensateur (4) s'appuie contre le moyeu respectif.

4. Accouplement compensateur selon la revendication 3, **caractérisé en ce que** la partie de contact extérieure (7) et la partie de contact intérieure (8) sont de courbure convexe et celles-ci sont disposées de manière décalée l'une par rapport à l'autre dans la direction périphérique.

5. Accouplement compensateur selon l'une des revendications 3 et 4, **caractérisé en ce que** la partie de contact extérieure (7) et la partie de contact intérieure (8) comprennent une région de chevauchement (9) commune.

6. Accouplement compensateur selon l'une des revendications précédentes, **caractérisé en ce que** la partie de dégagement (10, 11) du contour extérieur (5) et/ou du contour intérieur (6) est de courbure concave et/ou est disposée en regard de la partie de contact de l'autre moyeu respectif dans la direction radiale.

7. Accouplement compensateur selon l'une ou plusieurs des revendications précédentes, **caractérisé en ce qu'**au moins une cavité intérieure est formée entre le moyeu intérieur (2) et l'élément compensateur (4) et/ou au moins une cavité extérieure (13) est formée entre le moyeu creux (3) et l'élément compensateur (4).

8. Accouplement compensateur selon l'une des revendications précédentes, **caractérisé en ce que** la partie de dégagement (10) du contour extérieur (5) et la cavité intérieure (12) sont formées entre deux parties de contact extérieures (7) dans la direction périphérique, et **en ce que** la partie de dégagement (11) du contour intérieur (6) et la cavité extérieure (13) sont formées entre deux parties de contact intérieures (8) dans la direction périphérique.

9. Accouplement compensateur selon l'une des revendications 3 à 8, **caractérisé en ce que** le contour extérieur (5) et/ou le contour intérieur (6) se composent, sur toute la périphérie, de préférence en alternance, de plusieurs parties de contact extérieures, de contact intérieures et/ou de dégagement qui se prolongent les unes dans les autres.

10. Accouplement compensateur selon l'une ou plusieurs des revendications précédentes, **caractérisé en ce que** les parties de contact extérieures, de contact intérieures et/ou de dégagement sont réalisées sous forme de segments de cercle et/ou la forme du contour extérieur (5) et/ou du contour intérieur (6) est un circulo-polygone, en particulier un circulo-triangle, un circulo-quadrilatère et/ou un circulo-pentagone.

11. Accouplement compensateur selon l'une des revendications 3 à 10, **caractérisé en ce que** la partie de contact extérieure (7) du moyeu intérieur (2) et/ou la partie de contact intérieure (8) du moyeu creux (3) sont déplaçables dans la direction radiale pour le serrage de l'élément compensateur (4).

12. Accouplement compensateur selon l'une ou plusieurs des revendications précédentes, **caractérisé en ce que** le moyeu intérieur (2) et/ou le moyeu creux (3) sont réalisés en plusieurs parties et/ou de manière divisible pour l'entretien ou le remplacement de l'élément compensateur (4).

13. Accouplement compensateur selon l'une des revendications 3 à 12, **caractérisé en ce que** la partie de contact extérieure (7) et/ou la partie de contact intérieure (8) sont réalisées de manière bombée en coupe axiale.

14. Accouplement compensateur selon l'une des revendications 3 à 14, **caractérisé en ce que** l'élément compensateur (4) comprend, pour le centrage axial, une rainure et/ou une nervure s'étendant dans la direction périphérique, laquelle vient en prise par complémentarité de forme dans une nervure de centrage et/ou une rainure de centrage, s'étendant dans la direction périphérique, de la partie de contact extérieure (7) et/ou de la partie de contact intérieure (8).

15. Accouplement compensateur selon l'une ou plusieurs des revendications précédentes, **caractérisé en ce que** l'élément compensateur (4) est divisible dans une région de fermeture et la région de fermeture est espacée du contour extérieur (5) et/ou du contour intérieur (6).

16. Accouplement compensateur selon l'une ou plusieurs des revendications précédentes, **caractérisé en ce que** l'élément compensateur (4) comporte au moins une courroie dentée en particulier renforcée, laquelle comprend des éléments d'entrée en prise fixés à sa denture par complémentarité de forme, à force et/ou par liaison de matière, et **en ce que** la partie de contact extérieure (7) et/ou la partie de contact intérieure (8) comprennent une denture.

17. Accouplement compensateur selon l'une ou plusieurs des revendications précédentes, **caractérisé en ce que** l'élément compensateur (4) comporte une courroie dentée intérieure imbriquée avec le moyeu intérieur (2), une courroie dentée extérieure imbriquée avec le moyeu creux (3) et un élément intermédiaire disposé entre celles-ci ou imbriqué avec celles-ci, l'élément intermédiaire étant non élastique.

18. Accouplement compensateur selon l'une ou plusieurs des revendications précédentes, **caractérisé en ce que** l'accouplement compensateur comprend un élément de centrage qui centre le moyeu intérieur (2) dans le moyeu creux (3), l'élément de centrage étant un palier lisse doté d'au moins une surface de glissement sphérique ou un palier à roulement déplaçable axialement.

19. Chaîne cinématique, en particulier pour un véhicule ferroviaire, comprenant un entraînement, en particulier un moteur électrique, une boîte de vitesses, un ensemble d'arbres de roue pouvant être entraîné et un accouplement compensateur élastique en torsion qui est disposé, côté entraînement, entre l'entraînement et la boîte de vitesses ou, côté sortie, entre la boîte de vitesses et l'ensemble d'arbres de roue, **caractérisé en ce que** l'accouplement compensateur est réalisé selon l'une ou plusieurs des revendications précédentes.
